# EUROPÄISCHE PATENTSCHRIFT

(11) **EP 2 882 635 B1**
(45) Veröffentlichungstag und Bekanntmachung des Hinweises auf die Patenterteilung: **13.09.2017**
(21) Anmeldenummer: 13753541.5
(22) Anmeldetag: 24.07.2013
(51) Int. Cl.: B62D 65/18, B65G 41/00

(54) **ÜBERFLURFÖRDEREINRICHTUNG MIT SELBSTTRAGENDEM TRAGGERÜST**
OVERHEAD CONVEYOR STRUCTURE ON TOP OF A GANTRY
STRUCTURE DE CONVOYEUR AERIEN AU-DESSUS D'UN PORTIQUE

(30) Priorität: 09.08.2012 DE 102012214127
(43) Veröffentlichungstag der Anmeldung: 17.06.2015
(73) Patentinhaber: Hösker, Torsten, 74706 Osterburken (DE)
(72) Erfinder: Hösker, Torsten, 74706 Osterburken (DE)
(74) Vertreter: advotec.
(86) Internationale Anmeldenummer: PCT/DE2013/000407
(87) Internationale Veröffentlichungsnummer: WO 2014/023277

(56) Entgegenhaltungen:
- EP-A1- 2 340 982
- DE-A1-102011 008 623
- JP-A- 2003 341 818
- JP-A- 2008 222 137
- JP-A- 2009 012 141

## Beschreibung

Die Erfindung betrifft eine Überflurfördereinrichtung zur Integration in einer Montageanlage zum Transport von Fahrzeugkomponenten gemäß dem Oberbegriff des Anspruchs 1.

Die JP 2003-341818 A offenbart eine Transportvorrichtung für Fahrzeugkomponenten, wobei die Fahrzeugkomponenten hängend in einer unteren Ebene an einem Traggerüst transportiert werden. Hierbei ist vorgesehen, dass die Transportvorrichtung aus einzelnen modularen Sektionen aufgebaut wird.

In Montageanlagen zur Herstellung von Fahrzeugen werden verschiedenste Arten von Fördereinrichtungen sowie Überflurfördereinrichtungen eingesetzt. Aufgrund der zum jeweils herzustellenden Fahrzeug individuell abgestimmten Montageanlagen und hieran ausgerichteten Fördereinrichtungen, werden entsprechend die betrachteten Überflurfördereinrichtungen individuell ausgeführt und hergestellt. Eine Überflurfördereinrichtung der vorliegenden Art betrifft hierbei diejenigen Fördereinrichtungen, unterhalb deren zumindest soviel freier Bewegungsraum verbleibt, dass eine Person ungehindert darunter laufen kann. In aller Regel wird hierbei eine freie Durchgangshöhe von 2,5 m oder mehr angestrebt, so dass ebenso Gabelstapler oder andere Transportfahrzeuge die Überflurfördereinrichtung unterqueren können. Ebenso werden entsprechende Überflurfördereinrichtungen eingesetzt, um einen zusätzlichen Montageraum zu gewinnen, wobei unter der Überflurfördereinrichtung auf dem Boden stehend eine weitere Fördereinrichtung oder eine sonstige Montageanlage angeordnet ist.

Zur Integration entsprechender Überflurfördereinrichtungen in eine gesamte Montageanlage in ein Gebäude ist es im Stand der Technik üblich, ein Traggerüst zur Aufstellung der eigentlichen Fördereinrichtung vor Ort im Gebäude aus Stahlträgern oder dergleichen zusammenzubauen, wobei in aller Regel die Streben und Pfeiler miteinander verschweißt werden. Dies gestattet die optimale Anpassung an die vorliegenden Verhältnisse sowohl hinsichtlich der Montageanlage als auch hinsichtlich der Gebäudemöglichkeiten und insbesondere können bereits vorhandene Montageanlagen oder Gebäudeeinbauten Berücksichtigung finden.

Die üblicherweise anzufindende Praxis, vor Ort das Traggerüst anhand der vorgefundenen Gegebenheiten zusammenzusetzen, führt zu einer in aller Regel unterbleibenden statischen Berechnung oder vorherigen Detail-Konstruktion des Traggerüsts der Überflurfördereinrichtung. Aufgrund dieser nicht durchgeführten Berechnung des Traggerüstes wird zur Sicherheit dieses in aller Regel deutlich überdimensioniert ausgeführt (ohne jedoch eine Gewähr dafür zu haben, dass eine hinreichende Sicherheit vorhanden ist).

Von besonderem Nachteil bei der aus dem Stand der Technik bekannten Ausführung einer Überflurfördereinrichtung ist jedoch der für den Aufbau der entsprechenden Überflurfördereinrichtung in der Montageanlage erforderliche erhebliche Zeitaufwand. Während dieser Aufbauarbeiten steht zwangsläufig im Bereich der herzustellenden Überflurfördereinrichtung die Montageanlage nicht anderweitig zur Verfügung. Insbesondere bei einem Umbau der Montageanlage von einer Ausführung beispielsweise zur Herstellung eines bestimmten Fahrzeugmodells zu einer neuen Ausführung der Montageanlage zur Herstellung eines geänderten Fahrzeugmodells, führt dies zu einem unerwünschten Produktionsausfall für die Dauer des Aufbaus der Überflurfördereinrichtung.

Aufgabe der vorliegenden Erfindung ist es daher, den Aufbau einer Überflurfördereinrichtung in einer Montageanlage gegenüber bisher Bekanntem zu beschleunigen.

Die vorliegende Aufgabe wird durch eine erfindungsgemäße Ausführungsform nach dem Anspruch 1 gelöst.

Vorteilhafte Ausführungsformen sind Gegenstand der Unteransprüche.

Die gattungsgemäße Überflurfördereinrichtung ist zunächst einmal bestimmt zur Integration in einer Montageanlage zum Transport von Fahrzeugkomponenten. Um welche Art von Fahrzeugkomponenten es sich hierbei handelt, ist ohne Belang. Wesentlich ist, dass die Überflurfördereinrichtung in einem gesamten Montagekonzept eingebunden wird und hierbei die Herstellung eines Fahrzeugs durch den Transport der zugewiesenen Fahrzeugteile ermöglicht. Hierzu weist die Überflurfördereinrichtung ein Traggerüst und zumindest eine Fördereinrichtung auf.

Gattungsgemäß weist das Traggerüst eine Länge von mehr als 5 m und eine Breite von mehr als 2 m auf. In welcher Höhe das Traggerüst der Überflurfördereinrichtung über dem Boden des bestimmungsgemäßen Gebäudes angebracht wird, ist für die vorliegende Erfindung ohne Belang, jedoch wird die freie Durchgangshöhe unterhalb des Traggerüstes zumindest 2 m betragen, um eine taugliche Nutzhöhe unterhalb des Traggerüsts zu gewährleisten. Das Traggerüst seinerseits wird hierbei von längsgerichteten und/oder quergerichteten oder diagonal miteinander verbundenen Tragbalkenelemente realisiert. Die Tragbalkenelemente sind hierbei in aller Regel stabartig ausgeführt und können sowohl Rohrprofile, T-Träger oder sonstige Formate aufweisen und hierbei sowohl als Zug-, Druck- oder Biegeträger ausgelegt sein.

Die zugehörige Fördereinrichtung ist hierbei auf dem Traggerüst montiert und ermöglicht einen Transport entsprechender Fahrzeugkomponenten, wobei der Transport in aller Regel entlang der Längsrichtung der Überflurfördereinrichtung vonstatten geht.

Weiterhin umfasst das Traggerüst Lagerungsmittel, auf denen die Überflurfördereinrichtung in der Montageanlage gelagert wird. Ob es sich hierbei um Festlager, Loslager oder sonstige Lagerungsarten handelt, ist zunächst ohne Belang. Zumindest stützt sich das Traggerüst im Wesentlichen in Richtung der Schwerkraft an den Lagerungsmitteln auf und von der Montageanlage bzw. dem Gebäude bereitgestellten Gegenlagern ab.

Die Integration der Überflurfördereinrichtung in einer Montageanlage mit geringen Stillstandzeiten in Folge der Aufstellung der Überflurfördereinrichtung wird durch eine selbsttragende Ausführung des Traggerüsts und eine Vormontage des Traggerüsts erzielt. Hierbei kann das Traggerüst vormontiert vom Herstellungsort zum Verwendungsort transportiert werden.

Erfindungsgemäß ist es vorgesehen, dass die Anzahl N_{L} an Lagerungsmitteln größer ist, als die zur Lagerung erforderliche Anzahl N_{E}. Das heißt, dass am Traggerüst eine Anzahl N_{L} von Lagerungsmitteln, auf denen jeweils eine Aufstellung in der Montageanlage erfolgen kann, vorhanden ist, jedoch zur Aufstellung der Überflurfördereinrichtung in der Montageanlage es gerade nicht erforderlich ist, dass jedes dieser vorhandenen Lagerungsmittel genutzt wird. Vielmehr ist es hinreichend, wenn lediglich in der erforderlichen Anzahl N_{E} Gegenlager vorhanden sind. Hierbei ist es weiterhin vorgesehen, dass die Auswahl der von den vorhandenen zu nutzenden Lagerungsmittel bei Aufstellung der Überflurfördereinrichtung in der Montageanlage beliebig in erforderlicher Anzahl N_{E} erfolgen kann. Dies bedeutet naheliegend, dass die Überflurfördereinrichtung unvermindert an allen vorhandenen Lagerungsmitteln in der Montageanlage auf Gegenlagern gelagert werden kann.

Besonders vorteilhaft ist es jedoch, wenn sowohl das Traggerüst als auch ebenso die Fördereinrichtung auf dem Traggerüst vor einer Aufstellung am Verwendungsort vormontiert werden. Hierbei kann das Traggerüst nebst der darauf angeordneten Fördereinrichtung vormontiert vom Herstellungsort zum Verwendungsort transportiert werden.

Es ist offensichtlich, dass es zur Einbindung der Fördereinrichtung in der Montageanlage einer Verbindung von diversen Schnittstellenverbindungen, sei es Stromverbindungen, Datenverbindungen oder Prozessleitungen, wie beispielsweise Druckluft oder Hydrauliköl, zwischen der vormontierten Überflurfördereinrichtung und der sonstigen Montageanlage bedarf.

Zumindest ist es erfindungsgemäß erforderlich, dass das eigentliche Traggerüst bereits vormontiert ist und vorteilhaft weiterhin die Fördereinrichtung noch vor einer Aufstellung am Verwendungsort auf dem Traggerüst montiert ist. Somit bedarf es zur Realisierung der Überflurfördereinrichtung in der Montageanlage lediglich der Freischaffung entsprechenden Platzes und Schaffung entsprechender Gegenlager zur Aufnahme der Lagerungsmittel, wobei sodann die vormontierte Überflurfördereinrichtung lediglich mittels Kran aufgestellt werden muss. Hierdurch wird die Montagezeit zur Aufstellung der Überflurfördereinrichtung gegenüber allem Bekannten drastisch gesenkt. Wenngleich dies mit geringem Nachteil hinsichtlich der flexiblen Anpassung an die örtlichen Gegebenheiten verbunden ist, so sind dennoch die Vorteile hinsichtlich des geringen Stillstands der Montageanlage deutlich von Vorteil.

Besonders vorteilhaft ist es hierbei, wenn das Traggerüst in Art eines räumlichen Fachwerks ausgeführt ist. Das heißt, dass das selbsttragende Traggerüst aus längsgerichteten, quergerichteten, diagonalen und aufrecht stehenden miteinander verbundenen Tragbalkenelementen gebildet wird. Durch diese Fachwerkkonstruktion kann eine hohe Steifigkeit des Traggerüsts bei geringem Gewicht gewährleistet werden, welches insbesondere den Transport der vormontierten Überflurfördereinrichtung begünstigt.

Weiterhin ist es von besonderem Vorteil, wenn das Traggerüst von einer Schweißkonstruktion gebildet wird. Das heißt, dass das selbsttragende Traggerüst im Wesentlichen aus Stahlstreben und gegebenenfalls sonstigen Stahlelementen, wie z.B. Knotenblechen, gebildet wird, welche miteinander verschweißt werden. Sofern die Fördereinrichtung von geringem Gewicht ist oder eine Gewichtseinsparung insgesamt von hoher Wichtigkeit ist, ist es ebenso denkbar, das Traggerüst beispielsweise aus Aluminium herzustellen und ebenso die einzelnen Elemente, wie Streben und Knotenelemente, miteinander zu verschweißen.

Eine Schweißkonstruktion hat gegenüber einer zusammen geschraubten Ausführung unter anderem den Vorteil, dass nicht die Gefahr besteht, dass zu einem späteren Zeitpunkt vom Anlagenbetreiber eine unzulässige Änderung am Traggerüst vorgenommen wird. Bei Ausführungen aus dem Stand der Technik ist dies aufgrund der in der Regel vorhandenen Überdimensionierung ggf. unkritisch. Bei einer spezifischen Auslegung des Traggerüsts auf die zu tragende Fördereinrichtung kann ein Eingriff in das Traggerüst zu weitreichenden Schäden führen, dem mit einer Schweißkonstruktion entgegen gewirkt wird.

Weiterhin ist es von besonderem Vorteil, wenn entlang zumindest einer Längsseite der Fördereinrichtung ein Wartungsgang vorhanden ist. Dieser ist hier dergestalt auszuführen, dass er gefahrfrei begehbar ist. Hierzu wird der Wartungsgang an einer Längsseite des Traggerüsts angeordnet und mit diesem verbunden. Hierbei kann die Verbindung des Wartungsgangs mit dem Traggerüst sowohl in der Vormontage der Überflurfördereinrichtung vorgenommen werden, als es auch ebenso denkbar ist, den Wartungsgang als ein in sich vormontiertes Anbauteil vor Ort am Traggerüst zu befestigen.

Besonders vorteilhaft ist es, wenn Wartungsgänge beidseitig der Fördereinrichtung vorhanden sind. Zur Erhöhung der Steifigkeit der gesamten Anordnung und insbesondere der Stabilität der Wartungsgänge sind hierbei die beidseitig längs der Fördereinrichtung vorhandenen Wartungsgänge mittels Verbindungsträger miteinander verbunden.

Im Falle von beidseitig vorhandenen Wartungsgängen mit zwischenliegender Fördereinrichtung, wobei die Wartungsgänge endseitig mittels Verbindungsträger verbunden sind, ist es weiterhin besonders vorteilhaft, wenn zumindest eine Vertikaltransportöffnung vorgesehen wird. Diese ist zwischen Traggerüst, Wartungsgängen und Verbindungsträger anzuordnen. Durch diese Vertikaltransportöffnung können sodann die Fahrzeugkomponenten von der Fördereinrichtung, welche sich oberhalb des Traggerüsts befindet, in weitgehend vertikaler Richtung durch die Überflurfördereinrichtung von oberhalb des Traggerüstes nach unterhalb des Traggerüsts transportiert werden. Somit kann eine Übergabe von oberhalb des Traggerüsts transportierten Fahrzeugkomponenten an eine andere Fördereinrichtung oder eine Montageeinrichtung unterhalb der Überflurfördereinrichtung vonstatten gehen.

Hierbei ist es entsprechend besonders vorteilhaft, wenn an beiden Enden der Fördereinrichtung entsprechende Vertikaltransportöffnungen vorgesehen werden, so dass an einem Ende der Überflurfördereinrichtung eine Übernahme von Fahrzeugkomponenten von unterhalb der Überflurfördereinrichtung erfolgen kann. Sodann kann die Fahrzeugkomponente entlang der Überflurfördereinrichtung von der darauf befindlichen Fördereinrichtung transportiert werden und nachfolgend am jeweils anderen Ende der Überflurfördereinrichtung durch die andere Vertikaltransportöffnung wiederum herab von oberhalb des Traggerüsts nach unterhalb des Traggerüsts übergeben werden.

Bei entsprechend vorhandenen beidseitigen Wartungsgängen mit der zwischenliegenden Vertikaltransportöffnung am Ende des Traggerüsts ist es weiterhin besonders vorteilhaft, wenn ein zwischen Offenstellung und Geschlossenstellung verstellbares Schließmittel vorhanden ist. Hierbei ist das Schließmittel begehbar dergestalt auszuführen, dass es in der Offenstellung die erforderliche Vertikaltransportöffnung zur Nutzung der Überflurfördereinrichtung frei gibt und bei einer Geschlossenstellung einen vorteilhaft stufenfreien Übergang zwischen den beiden Wartungsgängen ermöglicht. Somit kann im Wartungsfall bei in aller Regel vorliegendem Stillstand der Fördereinrichtung diese im Wesentlichen umlaufend mittels der Wartungsgänge und dem verbindenden Schließmittel begangen werden.

Aufgrund der Vormontage der Überflurfördereinrichtung und der entsprechend auf das Gewicht der Überflurfördereinrichtung und deren Gewichtsverteilung ausgelegten Steifigkeit des Traggerüsts ist es besonders vorteilhaft möglich, eine variable veränderbare Aufstellung des Traggerüsts in der Montageanlage zuzulassen. Hiermit wird insbesondere der Nachteil kompensiert, dass nicht wie im Stand der Technik eine Anpassung an die vor Ort gefundenen Gegebenheiten erfolgen kann, sondern vielmehr die Überflurfördereinrichtung fertig vormontiert mit definierten Positionen der Lagerungsmittel eine entsprechende Möglichkeit zur Aufstellung in der Montageanlage vorfinden muss.

Besonders vorteilhaft ist hierbei eine Ausführung, welche zumindest sechs Lagerungsmittel aufweist, wobei die erforderliche Anzahl N_{E} kleiner/gleich dem aufgerundeten 0,72-fachen der Anzahl N_{L} der vorhandenen Lagerungsmittel ist. Das heißt, dass bei sechs vorhandenen Lagerungsmitteln die Aufstellung auf zumindest fünf Gegenlagern zu erfolgen hat. Bei sieben oder acht vorhandenen Lagerungsmitteln hat die Aufstellung mit zumindest sechs der vorhandenen Lagerungsmittel zu erfolgen. Bei neun vorhandenen Lagerungsmitteln sind es entsprechend sieben zu verwendende Lagerungsmittel, usw.. Besonders vorteilhaft ist es, wenn die Steifigkeit des Traggerüsts derart gewählt wird, dass insbesondere lediglich die aufgerundet 0,6-fache Anzahl N_{L} der vorhandenen Lagerungsmittel als erforderliche Anzahl N_{E} notwendig ist.

Weiterhin ist es vorteilhaft, wenn die Überflurfördereinrichtung Stützelemente aufweist, auf denen jeweils ein Lagerungsmittel angeordnet ist. Insofern bedarf es in vorteilhafter Ausführung derjenigen Anzahl an Stützelementen entsprechend der erforderlichen Anzahl N_{E} der Lagerungsmittel, wobei in vorteilhafter Ausführung dennoch zu jedem Lagerungsmittel ein Stützelement zugeordnet wird. Hierbei können die Stützelemente freistehende Stützpfeiler und/oder Wandkonsolen und/oder freihängende Zugelemente sein. Zumindest ist vorgesehen, dass die Überflurfördereinrichtung mit dem Traggerüst am Lagerungsmittel auf Gegenlagern der Stützelemente aufliegt, welche ihrerseits wiederum eine Anbindung in der Montageanlage bzw. dem Gebäude erfahren.

Hierbei ist es besonders vorteilhaft, wenn die Anzahl an Stützelementen größer ist als die zur Lagerung erforderliche Anzahl N_{E}, wobei ein Beliebiges der vorhandenen Stützelemente ohne Einschränkung der Verwendbarkeit der Überflurfördereinrichtung am Verwendungsort entfernt und/oder ersetzt werden kann. Somit kann insbesondere im Schadensfall, beispielsweise wenn ein Transportfahrzeug gegen einen Stützpfeiler fährt, ein Stützpfeiler demontiert werden, ohne dass dies die Tauglichkeit der Überflurfördereinrichtung sowohl hinsichtlich des Transports von Fahrzeugkomponenten mittels der Fördereinrichtung einschränkt, als auch die hinreichende Statik gewährleistet wird. Somit kann entsprechend im Schadensfall ein unkomplizierter Austausch erfolgen, ohne dass ein Montagestillstand eintreten muss.

In den nachfolgenden Figuren wird skizzenhaft eine beispielhafte Überflurfördereinrichtung mit einem Traggerüst aufstehend auf Stützpfeilern und umlaufenden Wartungsgang skizziert, wobei auf die Darstellung der zur Überflurfördereinrichtung gehörenden Fördereinrichtung verzichtet wurde.

Es zeigen:
- Fig. 1: eine beispielhafte Überflurfördereinrichtung in perspektivischer Ansicht unter Weglassung der Fördereinrichtung;

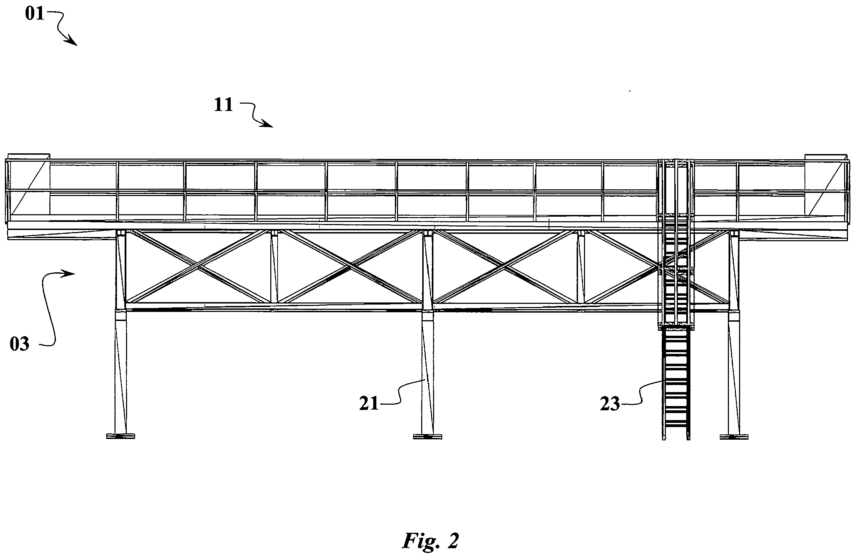

- Fig. 2: eine Seitenansicht zur Fig. 1;
- Fig. 3: einen Halbschnitt zur Ansicht aus Fig. 1;

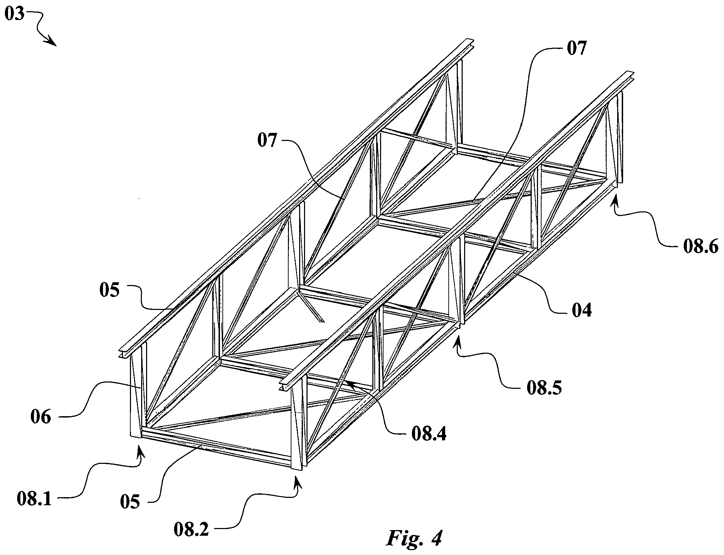

- Fig. 4: das Traggerüst zur Fig. 1;
- Fig. 5: den Wartungsgang zur Fig. 1.

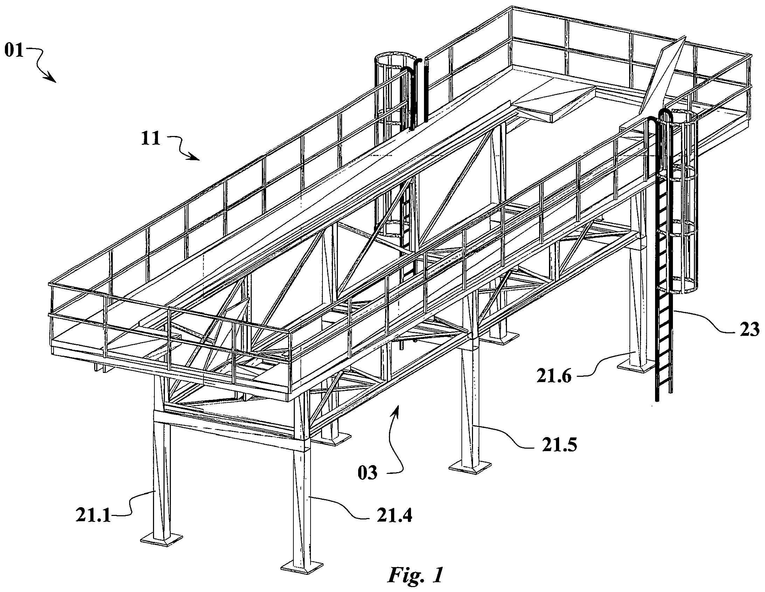

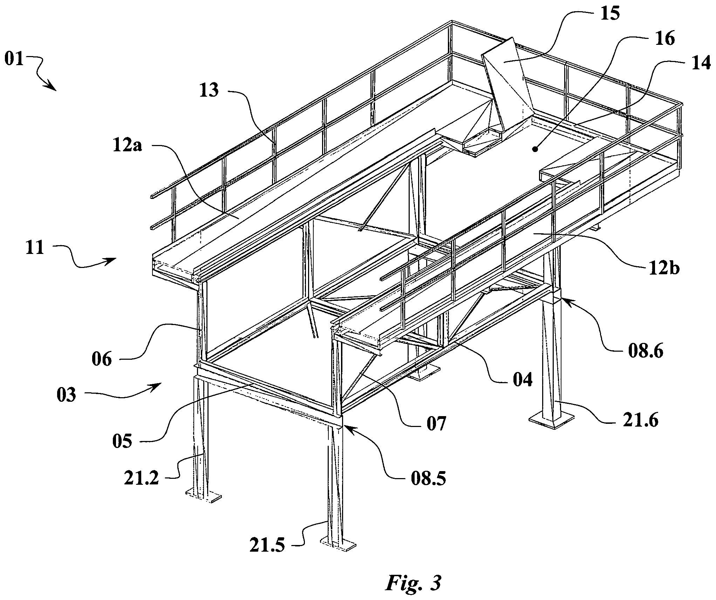

In der **Figur 1** ist eine perspektivische Darstellung einer Überflurfördereinrichtung 01 in beispielhafter Ausführungsform skizziert. Hierbei wurde jedoch auf die Darstellung der zur Überflurfördereinrichtung 01 gehörenden Fördereinrichtung verzichtet. Diese befindet sich, wie der Fachmann leicht nachvollziehen kann, mittig im Traggerüst 03 und steht hierbei je nach Ausführungsform erhaben über dem Traggerüst 03 über. Das Traggerüst 03 ist hierbei in Art eines Fachwerks ausgeführt und umfasst eine Mehrzahl von miteinander verschweißten Tragbalkenelementen 04-07. Wie hierzu aus der **Figur 3** ersichtlich ist, wird das Traggerüst 03 von längsgerichteten Tragbalkenelementen 04, quergerichteten Tragbalkenelementen 05, aufrechten Tragbalkenelementen 06 sowie diagonalen Tragbalkenelementen 07 gebildet. Das Traggerüst 03 mit seinen Tragbalkenelementen 04, 05, 06 und 07 ist hierbei dergestalt ausgeführt, dass mit aufmontierter Fördereinrichtung eine hinreichende selbsttragende Eigensteifigkeit vorhanden ist, so dass ein Transport der gesamten Überflurfördereinrichtung 01 zumindest des Traggerüsts 03 mit aufmontierter Fördereinrichtung als Ganzes möglich ist. Zu diesem Zweck gilt es, das Traggerüst 03 hinsichtlich dessen Steifigkeit, insbesondere Biegesteifigkeit, dahingehend auszulegen, dass sowohl für den Transportfall als auch für die spätere Aufstellung die Lagerung auf den zugehörigen Lagerungsmitteln 08 verformungsfrei möglich ist.

Entsprechend der jeweils zu bestimmenden statischen Auslegung der Überflurfördereinrichtung 01 weist das Traggerüst 03 unterseitig eine Mehrzahl von Lagerungsmitteln 08.1 bis 08.6 auf, auf denen die Überflurfördereinrichtung auf Stützpfeilern 21.1 bis 21.6 montiert ist. Weiterhin ist in diesem Ausführungsbeispiel die Statik des Traggerüsts 03 derart ausgelegt und die Steifigkeit derart gewählt, dass die Stabilität der gesamten Anordnung auch bei Weglassen eines Stützpfeilers 21.1 bis 21.6 gewährleistet ist. Somit ist es zum einen denkbar, im Aufstellungsfall in der Montageanlage lediglich fünf der dargestellten sechs Stützpfeiler 21 einzusetzen oder es ist ebenso möglich, sechs Stützpfeiler einzusetzen, wobei im Schadensfall, beispielsweise durch Kollision mit einem Fahrzeug, ein Stützpfeiler ohne Einschränkung der Tauglichkeit der Überflurfördereinrichtung ersetzt werden kann.

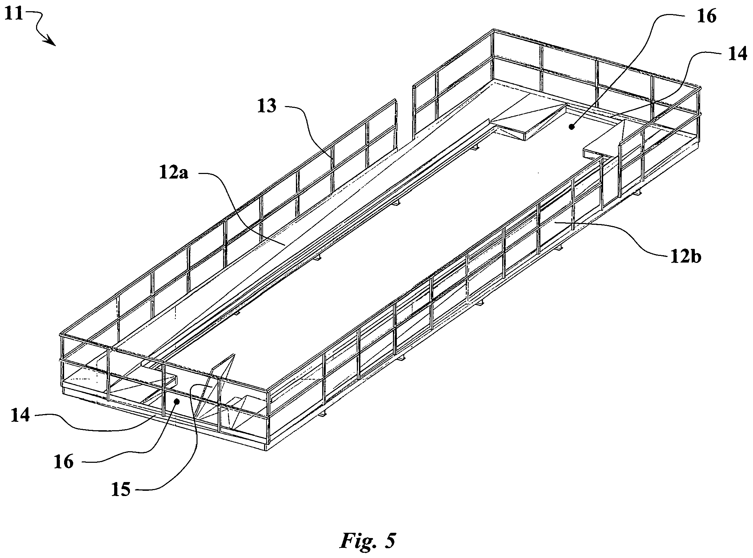

Weiterhin ist das zur Überflurfördereinrichtung 01 gehörende Wartungsgerüst 11 mit sich beidseitig der Flurfördereinrichtung erstreckenden Wartungsgängen 12a und 12b - siehe auch Fig. 5 - zu erkennen. Diese Wartungsgänge 12 sind endseitig mit Verbindungsträgern 14 verbunden, so dass eine erhöhte Stabilität der gesamten Anordnung mit dem Wartungsgerüst 11 bzw. der Wartungsgänge 12a, 12b gegeben ist. Ein umlaufendes Sicherheitsgeländer 13 gewährleistet hierbei die Sicherheit der entsprechenden Wartungspersonen beim Betreten des Wartungsgangs 12. Der Aufgang zum Wartungsgang 12 wird durch Leitern 23 in Anordnung am Wartungsgerüst 11 ermöglicht.

Weiterhin sind die beiden endseitig vorhandenen Vertikaltransportöffnungen 16 zu erkennen, durch welche die zu transportierende Fahrzeugkomponente gereicht werden kann. Um den Übergang von einem Wartungsgang 12a zum anderen Wartungsgang 12b gefahrenfrei zu ermöglichen, sind weiterhin bei den Vertikaltransportöffnungen 16 Schließmittel 15 vorhanden. Diese können von einer skizzierten Offenstellung in eine Geschlossenstellung gebracht werden, wobei sodann ein ebener Übergang von einer Seite zur anderen Seite vorhanden ist.

## Patentansprüche

1. Überflurfördereinrichtung (01) zur Integration in einer Montageanlage zum Transport von Fahrzeugkomponenten mit einem Traggerüst (03) und zumindest einer Fördereinrichtung, wobei das Traggerüst (03) eine Länge von mehr als 5 m und eine Breite von mehr als 2 m aufweist und längsgerichtete und/oder quergerichtete und/oder diagonale miteinander verbundene Tragbalkenelemente (04, 05, 07) umfasst, wobei die Fördereinrichtung auf dem Traggerüst (03) montiert ist und einen Transport von Fahrzeugkomponenten durchführen kann, wobei das Traggerüst (03) Lagerungsmittel (08) aufweist zur Lagerung der Überflurfördereinrichtung (01) in der Montageanlage, wobei das Traggerüst (03) selbsttragend ausgeführt ist und vormontiert vom Herstellungsort zum Verwendungsort transportiert werden kann
**dadurch gekennzeichnet,**
**dass** die Anzahl N_{L} an Lagerungsmitteln (08) größer ist als die zur Lagerung erforderliche Anzahl N_{E}, wobei die Lagerung der Überflurfördereinrichtung (01) in erforderlicher Anzahl N_{E} bei beliebig gewählten Lagerungsmitteln (08) erfolgen kann.

2. Überflurfördereinrichtung (01) nach Anspruch 1,
**dadurch gekennzeichnet,**
**dass** die Fördereinrichtung unter Vernachlässigung von Schnittstellenverbindungen funktionsfähig auf dem Traggerüst (03) vormontiert ist.

3. Überflurfördereinrichtung (01) nach Anspruch 1 oder 2,
**dadurch gekennzeichnet,**
**dass** das Traggerüst (03) in Art eines räumlichen Fachwerks ausgeführt ist, welches längsgerichtete und quergerichtete und diagonale und aufrechte miteinander verbundene Tragbalkenelemente (04, 05, 06, 07) umfasst.

4. Überflurfördereinrichtung (01) nach Anspruch 3,
**dadurch gekennzeichnet,**
**dass** das Traggerüst (03) von einer Schweißkonstruktion gebildet wird.

5. Überflurfördereinrichtung (01) nach einem der Ansprüche 1 bis 4,
**gekennzeichnet durch**
einen im Wesentlichen gefahrfrei begehbaren am Traggerüst (03) angeordneten Wartungsgang (12a, 12b) entlang zumindest einer, insbesondere beider, Längsseiten der Fördereinrichtung.

6. Überflurfördereinrichtung (01) nach Anspruch 5,
**dadurch gekennzeichnet,**
**dass** beidseitig der Fördereinrichtung vorhandene Wartungsgänge (12a, 12b) an beiden Enden der Überflurfördereinrichtung (01) miteinander mittels Verbindungsträger (14) verbunden sind.

7. Überflurfördereinrichtung (01) nach Anspruch 6,
**gekennzeichnet durch**
zumindest eine Vertikaltransportöffnung (16) zwischen Traggerüst (03) und beidseitigen Wartungsgängen (12a, 12b) und Verbindungsträger (14), durch die Fahrzeugkomponenten von der Fördereinrichtung oberhalb des Traggerüsts (03) nach unterhalb des Traggerüsts (03) transportiert werden können.

8. Überflurfördereinrichtung (01) nach Anspruch 7,
**dadurch gekennzeichnet,**
**dass** die beidseitigen Wartungsgänge (12a, 12b) bei der Vertikaltransportöffnung (16) mittels eines zwischen einer Offenstellung und Geschlossenstellung verstellbarem Schließmittels (15) begehbar verbunden werden können.

9. Überflurfördereinrichtung (01) nach einem der Ansprüche 1 bis 8,
**gekennzeichnet durch**
zumindest sechs Lagerungsmittel (08), wobei die erforderliche Anzahl N_{E} kleiner/gleich aufgerundet der 0,72-fachen, insbesondere 0,6-fachen, Anzahl N_{L} der vorhandenen Lagerungsmittel (08) ist.

10. Überflurfördereinrichtung (01) nach einem der Ansprüche 1 bis 9,
**gekennzeichnet durch**
Stützelemente als freistehende Stützpfeiler (21) und/oder Wandkonsolen und/oder freihängende Zugelemente an denen jeweils ein Lagerungsmittel (08) angeordnet ist.

11. Überflurfördereinrichtung (01) nach Anspruch 10,
**dadurch gekennzeichnet,**
**dass** die Anzahl NS an Stützelementen (21) größer ist als die zur Lagerung erforderliche Anzahl NE, wobei ein beliebiges der vorhandenen Stützelemente (21), beispielsweise im Schadensfall, ohne Einschränkung der Verwendbarkeit der Überflurfördereinrichtung (01) entfernt und/oder ersetzt werden kann.

## Claims

1. An overhead conveying device (01) for integration in an assembly plant for transporting vehicle components, having a supporting framework (03) and at least one conveying device, wherein the supporting framework (03) has a length of more than 5 m and a width of more than 2 m and comprises longitudinally and/or transversely oriented and/or diagonal interconnected supporting beam elements (04, 05, 07), wherein the conveying device is mounted on the supporting framework (03) and can implement transport of vehicle components, wherein the supporting framework (03) has bearing means (08) for bearing the overhead conveying device (01) in the assembly plant, wherein the supporting framework (03) is designed to be self-supporting and can be transported in preassembled form from the place of manufacture to the place of use,
**characterized in that**
the number N_{L} of bearing means (08) is higher than the number N_{E} being required for bearing, wherein the overhead conveying device (01) can be borne at bearing means (08) being selected arbitrarily in the required number N_{E}.

2. The overhead conveying device (01) according to claim 1,
**characterized in that**
the conveying device, disregarding interface connections, is preassembled on the supporting framework (03) in an operative condition.

3. The overhead conveying device (01) according to claim 1 or 2,
**characterized in that**
the supporting framework (03) is designed in the manner of a spatial truss, which comprises longitudinally and transversely oriented and diagonal and upright interconnected supporting beam elements (04, 05, 06, 07).

4. The overhead conveying device (01) according to claim 3,
**characterized in that**
the supporting framework (03) is formed by a welded structure.

5. The overhead conveying device (01) according to any of the claims 1 to 4,
**characterized by**
a maintenance walkway (12a, 12b) along at least one longitudinal side of the conveying device, in particular along both longitudinal sides, the maintenance walkway being arranged at the supporting framework (03) and being accessible on foot substantially without any risk.

6. The overhead conveying device (01) according to claim 5,
**characterized in that**
maintenance walkways (12a, 12b), which are present on both sides of the conveying device, are connected to each other at both ends of the overhead conveying device (01) via connecting girders (14).

7. The overhead conveying device (01) according to claim 6,
**characterized by**
at least one vertical transport opening (16) between the supporting framework (03) and maintenance walkways (12a, 12b) being present on both sides as well as the connecting girders (14), through which transport opening vehicle components can be transported from the conveying device above the supporting framework (03) to a location below the supporting framework (03).

8. The overhead conveying device (01) according to claim 7,
**characterized in that**
the maintenance walkways (12a, 12b) being present on both sides, in the region of the vertical transport opening (16), can be connected to each other with a closing means (15) being adjustable between an open position and a closed position so as to be accessible on foot.

9. The overhead conveying device (01) according to any of the claims 1 to 8,
**characterized by**
at least six bearing means (08), wherein the required number N_{E} is smaller than/equal to the number N_{L} of present bearing means (08) multiplied by 0.72 and rounded up, in particular multiplied by 0.6.

10. The overhead conveying device (01) according to any of the claims 1 to 9,
**characterized by**
support elements as free-standing support pillars (21) and/or wall brackets and/or freely suspended traction elements, at each of which one bearing means (08) is arranged.

11. The overhead conveying device (01) according to claim 10,
**characterized in that**
the number N_{S} of support elements (21) is higher than the number N_{E} being required for bearing, wherein any one of the present support elements (21), for example in case of damage, can be removed and/or replaced without limiting the usability of the overhead conveying device (01).

## Revendications

1. Dispositif (01) de convoyeur aérien pour être intégré dans une usine d'assemblage pour transporter des composants de véhicule, comprenant un cadre (03) de support et au moins un dispositif de convoyeur, ledit cadre (03) de support ayant une longueur de plus de 5 m et une largeur de plus de 2 m et comprenant des éléments (04, 05, 07) de poutre interconnectés et orientés longitudinalement et/ou transversalement et/ou diagonalement, ledit dispositif de convoyeur étant monté sur le cadre (03) de support et pouvant effectuer un transport de composants de véhicule, ledit cadre (03) de support comprenant des moyens (08) d'appui pour appuyer le dispositif (01) de convoyeur aérien dans l'usine d'assemblage, ledit cadre (03) de support étant formé autoportant et pouvant être transporté de l'endroit de fabrication à l'endroit d'utilisation dans une forme préassemblée,
**caractérisé en ce que**
le nombre N_{L} des moyens (08) d'appui est plus grand que le nombre N_{E} nécessaire pour assurer l'appui, ledit dispositif (01) de convoyeur aérien pouvant être appuyé par des moyens (08) d'appui choisi arbitrairement dans le nombre N_{E} nécessaire.

2. Dispositif (01) de convoyeur aérien selon la revendication 1,
**caractérisé en ce que**
le dispositif de convoyeur, en négligeant des connexions d'interface, est préassemblé sur le cadre (03) de support en état opérationnel.

3. Dispositif (01) de convoyeur aérien selon la revendication 1 ou 2,
**caractérisé en ce que**
le cadre (03) de support est réalisé à la manière d'un colombage spatial qui comprend des éléments (04, 05, 06, 07) de poutre interconnectés et orientés longitudinalement et transversalement et diagonalement et verticalement.

4. Dispositif (01) de convoyeur aérien selon la revendication 3,
**caractérisé en ce que**
le cadre (03) de support est formé par une construction de soudure.

5. Dispositif (01) de convoyeur aérien selon l'une quelconque des revendications 1 à 4,
**caractérisé par**
un couloir (12a, 12b) de service le long d'au moins un côté longitudinal du dispositif de convoyeur, notamment le long des deux côtés longitudinaux, le couloir (12a, 12b) de service étant disposé au cadre (03) de support et étant accessible à pied essentiellement sans risque.

6. Dispositif (01) de convoyeur aérien selon la revendication 5,
**caractérisé en ce que**
des couloirs (12a, 12b) de service qui sont disposés des deux côtés du dispositif de convoyeur sont reliés l'un à l'autre aux deux extrémités du dispositif (01) de convoyeur aérien par des poutres (14) de connexion.

7. Dispositif (01) de convoyeur aérien selon la revendication 6,
**caractérisé par**
au moins une ouverture (16) de transport vertical entre le cadre (03) de support et des couloirs (12a, 12b) de service disposés des deux côtés et des poutres (14) de connexion, par laquelle (16) des composants de véhicule peuvent être transportés du dispositif de convoyeur au-dessus du cadre (03) de support à un endroit au-dessous du cadre (03) de support.

8. Dispositif (01) de convoyeur aérien selon la revendication 7,
**caractérisé en ce que**
les couloirs (12a, 12b) de service disposés des deux côtés près de l'ouverture (16) de transport vertical peuvent être reliés l'un à l'autre par un moyen (15) de fermeture ajustable entre une position ouverte et une position fermée pour être accessible à pied.

9. Dispositif (01) de convoyeur aérien selon l'une quelconque des revendications 1 à 8,
**caractérisé par**
au moins six moyens (08) d'appui, le nombre N_{E} nécessaire étant plus petit que/égal au nombre N_{L} des moyens (08) d'appui présents, ledit nombre étant multiplié par 0,72 et arrondi au nombre entier supérieur, notamment multiplié par 0,6.

10. Dispositif (01) de convoyeur aérien selon l'une quelconque des revendications 1 à 9,
**caractérisé par**
des éléments de support en tant que piliers (21) indépendants et/ou consoles murales et/ou éléments de traction suspendus librement, un moyen (08) d'appui étant disposé à chacun(e) des piliers (21), des consoles murales et des éléments de traction.

11. Dispositif (01) de convoyeur aérien selon la revendication 10,
**caractérisé en ce que**
le nombre N_{S} d' éléments (21) de support est plus grand que le nombre N_{E} nécessaire pour assurer l'appui, un quelconque des éléments (21) de support présents, par exemple dans le cas de dommage, pouvant être enlevé et/ou remplacé sans limitant l'utilité pratique du dispositif (01) de convoyeur aérien.
